# EUROPEAN PATENT APPLICATION

(11) **EP 4 679 598 A1**
(43) Date of publication of application: **14.01.2026**
(21) Application number: 24886176.7
(22) Date of filing: 28.10.2024
(51) Int. Cl.: H01M 50/242, H01M 10/6556, H01M 50/204

(54) **PACK HOUSING**

(30) Priority: 02.11.2023 KR 20230149660
(71) Applicant: LG ENERGY SOLUTION, LTD., Seoul 07335 (KR)
(72) Inventor: SHIN, Ju Hwan, Daejeon 34122 (KR); LEE, Hyoung Suk, Daejeon 34122 (KR); HUR, Nam Hoon, Daejeon 34122 (KR); KIM, Min Gu, Daejeon 34122 (KR)
(74) Representative: Plasseraud IP
(86) International application number: PCT/KR2024/016537
(87) International publication number: WO 2025/095502

(57) **Abstract**

Example embodiments provide a pack housing. The pack housing includes a plurality of plates coupled to each other, and side walls coupled to the plurality of plates and each including a plate part coupled to the plurality of plates, a side wall part perpendicular to the plate part, and a wing part spaced apart from the plate part with the side wall part between the wing part and the plate part, in which the plate part of each of the side walls includes a cavity, and each of the side walls includes an impact transfer structure horizontally overlapping the cavity of the plate part of each of the side walls.

## Description

### [Technical Field]

The present invention relates to a pack housing of a battery pack. The present application claims the benefit of priority based on Korean Patent Application No. 10-2023-0149660, filed on November 2, 2023, and the entire contents of the Korean patent application is incorporated herein by reference.

### [Background Art]

Secondary batteries can be charged and discharged a plurality of times unlike primary batteries. Secondary batteries have been widely used as energy sources for various types of wireless devices such as handsets, laptop computers, and cordless vacuum cleaners. Recently, a main use of secondary batteries is moving from mobile devices to mobility, as manufacturing costs per unit capacity of secondary batteries drastically decrease due to improved energy density and economies of scale and a range of battery electric vehicles (BEVs) increases to the same level as fuel vehicles.

A trend in the development of technology for secondary batteries for mobility is an improvement in energy density and safety. The safety of secondary batteries for mobility is directly related to passengers' lives and thus is very important . The safety of secondary batteries may be achieved through mechanical robustness, reliability of electrical insulation, and heat transfer delay when a thermal runaway event occurs.

### [Disclosure]

### [Technical Problem]

The present invention is directed to providing a pack housing with improved mechanical robustness.

### [Technical Solution]

Example embodiments of the present invention provide a pack housing. The pack housing includes a plurality of plates coupled to each other, and side walls coupled to the plurality of plates and each including a plate part coupled to the plurality of plates, a side wall part perpendicular to the plate part, and a wing part spaced apart from the plate part with the side wall part therebetween, the plate part of each of the side walls includes a cavity, and each of the side walls includes an impact transfer structure horizontally overlapping the cavity of the plate part of each of the side walls.

The plate part of each of the side walls may horizontally overlap the plurality of plates.

The impact transfer structure of each of the side walls may be configured to transfer an external impact applied via an outermost one of the vertical ribs to the plurality of plates.

The wing part of each of the side walls may include a horizontal rib parallel to mounting surfaces of the plurality of plates and vertical ribs perpendicular to the mounting surfaces of the plurality of plates, and a lower portion of each of the vertical ribs and the horizontal rib may form the impact transfer structure.

The impact transfer structure of each of the side walls may be oblique to mounting surfaces of the plurality of plates.

The wing part of each of the side walls may include a vertical rib perpendicular to mounting surfaces of the plurality of plates, and the impact transfer structure of each of the side walls may connect the vertical rib of the wing part of each of the side walls to a bottom surface of the plate part of each of the side walls.

Example embodiments provide a pack housing. The pack housing includes a plurality of plates coupled to each other, and side walls coupled to the plurality of plates and each including a plate part coupled to the plurality of plates, a side wall part perpendicular to the plate part, and a wing part spaced apart from the plate part with the side wall part therebetween, the plate part of each of the side walls includes a cavity, and each of the side walls includes an impact transfer structure configured to transfer an external impact applied via the wing part of each of the side walls to the plurality of plates.

The impact transfer structure of each of the side walls may horizontally overlap the cavity of the plate part of each of the side walls.

The impact transfer structure of each of the side walls may horizontally overlap a cooling channel of the plate part of each of the side walls.

The wing part of each of the side walls may include a horizontal rib parallel to mounting surfaces of the plurality of plates and vertical ribs perpendicular to the mounting surfaces of the plurality of plates, and a lower portion of each of the vertical ribs and the horizontal rib may form the impact transfer structure.

The impact transfer structure of each of the side walls may be oblique to mounting surfaces of the plurality of plates.

The wing part of each of the side walls may include a vertical rib perpendicular to mounting surfaces of the plurality of plates, and the impact transfer structure of each of the side walls may connect the vertical rib of the wing part of each of the side walls to a bottom surface of the plate part of each of the side walls.

### [Advantageous Effects]

A side wall of a pack housing according to example embodiments of the present invention includes an impact transfer structure configured to transfer an external impact applied via the side wall to plates formed by an extrusion process. Thus, when an event such as application of an external impact occurs in the pack housing, a main part of the external impact can be prevented from being transmitted to a battery cell assembly in the pack housing.

Effects achievable from example embodiments of the present invention are not limited to the above-described effects, and other effects that are not described herein will be clearly derived and understood by those of ordinary skilled in the art to which the example embodiments of the present invention pertain from the following description. That is, unintended effects achieved when the example embodiments of the present invention are implemented are derivable by those of ordinary skilled in the art from the example embodiments of the present invention.

### [Brief Description of the Drawings]

FIG. 1 is a plan view of a battery pack according to example embodiments.
FIG. 2 is a cross-sectional view taken along line 11-11' of FIG. 1.
FIG. 4 is a cross-sectional view of a battery pack according to other example embodiments.

### [Best Mode]

Hereinafter, embodiments of the present invention will be described in detail with reference to the accompanying drawings. Before describing embodiments of the present invention, the terms or expressions used in the present specification and claims should not be construed as being limited to as generally understood or as defined in commonly used dictionaries, and should be understood according to meanings and concepts corresponding to the present invention on the basis of the principle that the inventor(s) of the application can appropriately define the terms or expressions to optimally explain the present invention.

Therefore, embodiments set forth herein and configurations illustrated in the drawings are only examples of the present invention and do not reflect all the technical ideas of the present invention and thus it should be understood that various equivalents and modifications that replace the configurations would have been made at the filing date of the present application.

Well-known configurations or functions related to describing the present invention are not described in detail when it is determined that they would obscure the subject matter of the present invention due to unnecessary detail.

Because embodiments of the present invention are provided to more fully explain the present invention to those of ordinary skill in the art, the shapes, sizes, etc. of components illustrated in the drawings may be exaggerated, omitted, or schematically illustrated for clarity. Therefore, it should not be understood that the sizes or proportions of components fully reflect the actual sizes or proportions thereof.

### (First Embodiment)

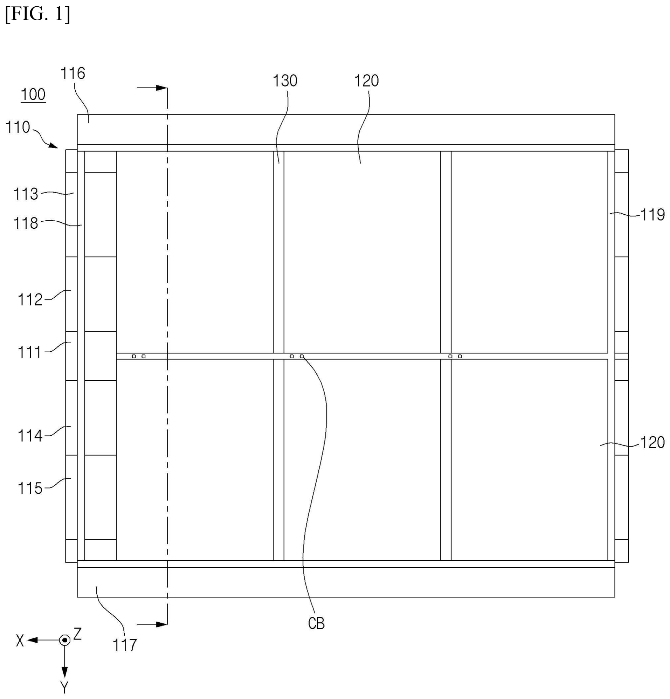

FIG. 1 is a plan view of a battery pack 100 according to example embodiments.

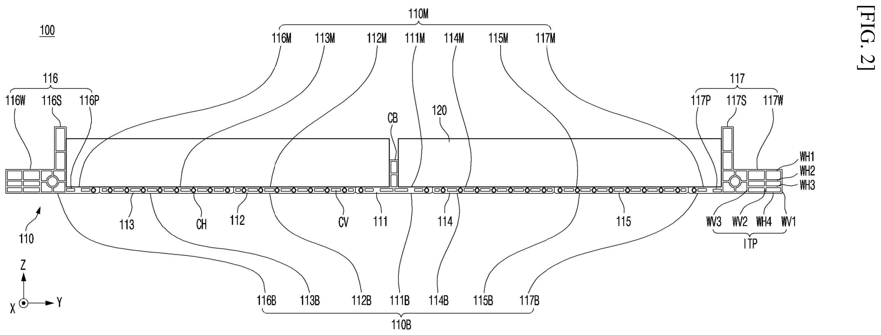

FIG. 2 is a cross-sectional view taken along line 1I-1I' of FIG. 1.

Referring to FIGS. 1 and 4, the battery pack 100 may include a pack housing 110, a plurality of battery cell assemblies 120, and cross-beams 130. The battery pack 100 may be a final product mounted in an application such as a vehicle.

The pack housing 110 may provide a space for mounting the battery cell assemblies 120 therein. The pack housing 110 may include plates 111, 112, 113, 114, and 115 and side walls 116, 117, 118, and 119.

The battery cell assemblies 120 may be on a mounting surface 110M of the pack housing 110. Two directions substantially parallel to the mounting surface 110M of the pack housing 110 are defined as an X-axis direction and a Y-axis direction, and a direction substantially perpendicular to the mounting surface 110M of the pack housing 110 is defined as a Z-axis direction. The X-axis direction, the Y-axis direction, and the Z-axis direction may be substantially perpendicular to one another. Unless otherwise mentioned, the definition of the directions will apply to the following drawings. The X-axis direction and the Y-axis direction may be referred to as horizontal directions, and the Z-axis direction may be referred to as a vertical direction.

Each of the plates 111, 112, 113, 114, and 115 and the side walls 116 and 117 may be provided by an extrusion process. An extrusion direction of each of the plates 111, 112, 113, 114, and 115 and the side walls 116 and 117 may be the X-axis direction. The plates 111, 112, 113, 114, and 115 and the side walls 116 and 117 may be arranged in the Y-axis direction. The side walls 118 and 119 may also be provided by the extrusion process.

FIG. 1 illustrates the pack housing 110 including the five plates 111, 112, 113, 114, and 115 between the side walls 116, 117 but should be understood only as a non-limiting example and does not limit the technical idea of the present invention in any sense. The number of the plates 111, 112, 113, 114, and 115 may vary according to the design of the battery pack 100 that is finally manufactured.

The plate 111 may be interposed between the plates 112 and 114. The plate 112 may be interposed between the plates 111 and 113. The plate 113 may be interposed between the plate 112 and the side wall 116. The plate 114 may be interposed between the plates 111 and 115. The plate 115 may be interposed between the plate 114 and the side wall 117.

Neighboring ones among the plates 111, 112, 113, 114, and 115 and the side walls 116 and 117 may be coupled to each other. Neighboring ones among the plates 111, 112, 113, 114, and 115 and the side walls 116 and 117 may be welded to each other.

The plate 111 may be welded to the plates 112 and 114. The plate 112 may be welded to the plates 111 and 113. The plate 113 may be welded to the plate 112 and the side wall 116. The plate 114 may be welded to the plates 111 and 115. The plate 115 may be welded to the plate 114 and the side wall 117.

According to example embodiments, the plates 111, 112, 113, 114, and 115 and the side walls 116 and 117 may be coupled by friction stir welding. Friction stir welding (FSW) may include processing materials to be joined (i.e., the plates 111, 112, 113, 114 and 115 and the side walls 116 and 117) with a non-consumable tool (generally, including a probe) that rotates at high speeds. Frictional heat is generated between the tool and the materials to be joined and thus the materials to be joined around the tool are softened by the frictional heat. Materials on opposite sides of a bonding surface may be mixed by plastic flow of the materials to be joined that are stirred and softened by the tool, thus causing the materials to be joined to be combined with each other.

During friction stir welding, the materials to be joined undergo intensive plastic deformation at high temperatures. A result of friction stir welding may include a microstructure with features of a defined equiaxed grain and have improved mechanical characteristics. As the result of friction stir welding, the pack housing 110 may include a welding bead.

Technicians of ordinary skill in the art will be able to easily derive embodiments in which the plates 111, 112, 113, 114 and 115 and the side walls 116 and 117 are combined by arc welding, e.g., carbon arc welding, plasma arc welding, shielded metal arc welding, submerged arc welding, metal inert gas (MIG) welding or tungsten inert gas (TIG) welding, gas welding, electro-slag welding, laser welding, ultrasonic welding, or the like, based on the description herein.

Each of the plates 111, 112, 113, 114 and 115 and plate parts 116P and 117P of the side walls 116 and 117 may include cooling channels CH, cavities CV, and a rib. Each of the cooling channels CH, the cavities CV, and the rib may extend in the extrusion direction (i.e., the X-axis direction).

The cooling channels CH may provide a path through which a cooling fluid flows. The cooling channels CH may be spaced apart from each other in the Y-axis direction. The cooling channels CH may be arranged in the Y-axis direction.

The cavities CV are empty spaces inside the plates 111, 112, 113, 114 and 115. Due to the formation of the cavities CV, the mass of the plates 111, 112, 113, 114 and 115 may decrease and thus energy density of the battery pack 100 including the pack housing 110 may improve.

The rib may define the cooling channels CH and the cavities CV. The cooling channels CH and the cavities CV may be surrounded by the rib. The rib may maintain airtightness of the cooling channels CH and the cavities CV.

The plate 111 may be at the center of the pack housing 110. The plate 111 may include a center beam CB. The center beam CB may protrude from a mounting surface 111M of the plate 111. The center beam CB may extend in the X-axis direction. The center beam CB may be formed by the extrusion process, together with the plate 111 or be provided separately from the plate 111 and welded to the mounting surface 111M of the plate 111.

The side wall 116 may include the plate part 116P, a side wall part 116SW, and a wing part 116W. The side wall part 116SW may be substantially perpendicular to the plate part 116P. The wing part 116W may be located outside the side wall part 116SW. The wing part 116W may be spaced apart from the plate part 116P with the side wall part 116SW interposed therebetween. The wing part 116W may include a plurality of coupling holes. The wing part 116W may be used to transfer the pack housing 110 or fix the pack housing 110 (e.g., fix the pack housing 110 to a vehicle or another battery tray).

The side wall 117 may include the plate part 117P, a side wall part 117SW, and a wing part 117W. The side wall part 117SW may be substantially perpendicular to the plate part 117P. The wing part 117W may be located outside the side wall part 117SW. The wing part 117W may be spaced apart from the plate part 117P with the side wall part 117SW interposed therebetween. The wing part 117W may include a plurality of coupling holes. The wing part 117W may be used to transfer the pack housing 110 or fix the pack housing 110 (e.g., fix the pack housing 110 to a vehicle or another battery tray).

The side wall 117 may be spaced apart from the side wall 116 with the plates 111, 112, 113, 114 and 115 interposed therebetween. The plate parts 116P and 117P may form a base plate of the pack housing 110, together with the plate 111, 112, 113, 114, and 115.

The plates 111, 112, 113, 114 and 115 and the plate parts 116P and 117P may form a base plate of the pack housing 110. The mounting surface 110M may include mounting surfaces 111M, 112M, 113M, 114M, 115M, 116M, and 117M of the plates 111, 112, 113, 114 and 115 and the plate parts 116P and 117P. The mounting surfaces 111M, 112M, 113M, 114M, 115M, 116M, and 117M of the plates 111, 112, 113, 114 and 115 and the plate parts 116P and 117P may form the mounting surface 110M of the pack housing 110.

A bottom surface 110B may be opposite to the mounting surface 110M. The bottom surface 110B may be substantially parallel to the mounting surface 110M. The bottom surface 110B may include bottom surfaces 111B, 112B, 113B, 114B, 115B, 116B, and 117B of the plates 111, 112, 113, 114 and 115 and the plate parts 116P and 117P. The bottom surfaces 111B, 112B, 113B, 114B, 115B, 116B and 117B of the plates 111, 112, 113, 114 and 115 and the plate parts 116P and 117P may form the bottom surface 110B of the pack housing 110.

According to example embodiments, each of the wing parts 116W and 117W may include horizontal ribs WH1, WH2, WH3 and WH4 and vertical ribs WV1, WV2 and WV3. The horizontal ribs WH1, WH2, WH3 and WH4 of each of the wing parts 116W and 117W may be substantially parallel to the mounting surface 110M. Each of the vertical ribs WV1, WV2 and WV3 of each of the wing parts 116W and 117W may be substantially perpendicular to the mounting surface 110M.

The horizontal ribs WH1, WH2, WH3 and WH4 and the vertical ribs WV1, WV2 and WV3 of each of the wing parts 116W and 117W may be a result of the extrusion process and cross each other. That is, each of the horizontal ribs WH1, WH2, WH3 and WH4 may cross each of the vertical ribs WV1, WV2 and WV3 and thus each of the wing parts 116 and 117 may have sufficient mechanical rigidity.

According to example embodiments, the horizontal rib WH4 of each of the wing parts 116W and 117W may be at the same level as the bottom surface 110B. According to example embodiments, the horizontal rib WH4 of each of the wing parts 116W and 117W may be coplanar with the bottom surface 110B. **In** another example, the horizontal rib WH4 of each of the wing parts 116W and 117W may overlap the cavities CV and the cooling channels CH horizontally (e.g., in the Y-axis direction).

According to example embodiments, the horizontal rib WH3 of each of the wing parts 116W and 117W may be farther from the bottom surface 110B than the horizontal rib WH4 of each of the wing parts 116W and 117W. According to example embodiments, the horizontal rib WH2 of each of the wing parts 116W and 117W may be farther from the bottom surface 110B than the horizontal rib WH3 of each of the wing parts 116W and 117W. According to example embodiments, the horizontal rib WH1 of each of the wing parts 116W and 117W may be farther from the bottom surface 110B than the horizontal rib WH2 of each of the wing parts 116W and 117W.

The vertical rib WV1 may be on an edge of the pack housing 110. The vertical rib WV2 may be interposed between the pack housing 110 and the vertical rib WV2. The vertical rib WV3 may be interposed between the pack housing 110 and the vertical rib WV2.

According to example embodiments, a lower part of the vertical rib WV1, a lower part of the vertical rib WV2, a lower part of the vertical rib WV3, and the horizontal rib WH4 may form an impact transfer structure ITP. The impact transfer structure ITP may overlap the plates 111, 112, 113, 114 and 115 and the plate parts 116P and 117P horizontally (e.g., in the Y-axis direction). The impact transfer structure ITP may overlap the plates 111, 112, 113, 114 and 115 and the cooling channels CH and the cavities CV of the plate parts 116P and 117P horizontally (e.g., in the Y-axis direction). The impact transfer structure ITP may include a part interposed between the mounting surface 110M and the bottom surface 110B in the Z-axis direction.

According to example embodiments, the vertical rib WV1 may be an outermost one among the vertical ribs WV1, WV2 and WV3. Accordingly, when a lateral impact (i.e., an impact in the Y-axis direction) is applied to the battery pack 100, the lateral impact may be applied to the battery pack 10 via the vertical rib WV1. Each of the wing parts 116W and 117W of the pack housing 110 of the battery pack 100 according to example embodiments includes the impact transfer structure ITP and thus an impact applied via the vertical rib WV1 may be transferred to the plates 111, 112, 113, 114 and 115 and the plate parts 116P and 117P. Because the plates 111, 112, 113, 114 and 115 and the plate parts 116P and117P that are provided by the extrusion process have relatively high mechanical robustness, damage to and deformation of the battery pack 100 due to an external impact may be prevented or alleviated, and the transfer of most part of an impact, which is applied via the vertical rib WV1, to the battery cell assembly 120 may be prevented or mitigated.

The plurality of battery cell assemblies 120 may be on the plates 111, 112, 113, 114 and 115 and the plate parts 116P and 117P of the pack housing 110. The plates 111, 112, 113, 114 and 115 and the plate parts 116P and 117P may support the plurality of battery cell assemblies 120. The side walls 116, 117, 118 and 119 may horizontally surround the plurality of battery cell assemblies 120. The side walls 116, 117, 118, and 119 may protect the plurality of battery cell assemblies 120.

For example, the battery pack 100 may be a moduleless type battery pack, and each of the plurality of battery cell assemblies 120 may not include a module frame. As another example, the battery pack 100 may be a module type battery pack, and each of the plurality of battery cell assemblies 120 may include a module frame.

Each of the plurality of battery cell assemblies 120 may include a plurality of banks connected in series to each other. Each of the plurality of banks may include one or more battery cells connected in parallel. The number of banks connected in series and the number of battery cells connected in parallel may be determined according to a voltage and a current to be output from each of the plurality of battery cell assemblies 120.

The battery cells are basic units of a lithium ion battery, i.e., a secondary battery. Each of the battery cells includes an electrode assembly, an electrolyte, and a case. Each of the battery cells may be a cylindrical battery cell, a prismatic battery cell, or a pouch type battery cell. An electrode assembly of the cylindrical battery cell is embedded in a cylindrical metal can. An electrode assembly of the prismatic battery cell is embedded in a prismatic metal can. An electrode assembly of the pouch type battery cell is embedded in a pouch case including an aluminum laminate sheet.

The electrode assembly may include a positive electrode, a negative electrode, and a separator between the positive electrode and the negative electrode. The electrode assembly may be a jelly-roll type electrode assembly or a stack type electrode assembly. The jelly-roll type electrode assembly may include a structure in which a positive electrode, a negative electrode, and a separator between the positive and negative electrodes are wound together. The stack type electrode assembly may include a plurality of positive electrodes and a plurality of negative electrodes that are sequentially stacked, and a plurality of separators therebetween.

The plurality of battery cell assemblies 120 may be arranged in the X-axis direction and the Y-axis direction. **In** FIG. 1, the number of battery cell assemblies 120 arranged in the X-axis direction is three, and the number of battery cell assemblies 120 arranged in the Y-axis direction is two. Accordingly, an array of the plurality of battery cell assemblies 120 may be a 3x2 array. Technicians of ordinary skill in the art will be able to easily derive a plurality of battery cell assemblies 120 arranged in an MxN array (here, M and N are each an integer of 2 or more), based on the above description.

The center beam CB may isolate the plurality of battery cell assemblies 120 in the Y-axis direction. The center beam CB may be interposed between the plurality of battery cell assemblies 120. The cross beams 130 may isolate the plurality of battery cell assemblies 120 in the X-axis direction. The cross beams 130 may be interposed between the plurality of battery cell assemblies 120.

An arrangement of the center beam CB and the plurality of battery cell assemblies 120 shown in FIG. 1 is a non-limiting example and should not be understood as limiting the technical idea of the present invention in any sense. A battery pack that includes various numbers and arrangements of a center beam, cross-beams, and battery cell assemblies will be easily derived by technicians of ordinary skill in the art based on the above description.

The battery pack 100 may further include exhaust devices. The exhaust devices may be installed on the side wall 118 or 119. The exhaust devices may be installed on each of the side walls 118 and 119. The exhaust devices may be configured to delay thermal propagation by discharging a high-temperature gas from the inside of the battery pack 100 to the outside when at least one of the plurality of battery cell assemblies 120 is in a thermal runaway state.

Here, the thermal runaway state of the plurality of battery cell assemblies 120 is a state in which a change of temperature of the plurality of battery cell assemblies 120 accelerates the change of temperature, i.e., uncontrollable positive feedback. The temperature of the plurality of battery cell assemblies 120 that are in the thermal runaway state sharply increases, and a large amount of a highpressure gas and combustion debris are discharged.

The battery pack 100 may further include electronic components. The electronic components may be mounted in the pack housing 110. A space between the cross beam 130 and the side wall 118 may be an electronic component mounting area. The electronic components may include an electronic device required to drive a battery pack.

The electronic components may include, for example, a battery management system (BMS). The BMS may be configured to monitor, balance, and control the battery pack 100. The monitoring of the battery pack 100 may include measuring voltages and currents of certain nodes inside the plurality of battery cell assemblies 120 and measuring temperatures at set positions in the battery pack 100. The battery pack 100 may include measuring devices for measuring a voltage, a current, and temperature as described above.

The balancing of the battery pack 100 is an operation of reducing a deviation between the plurality of battery cell assemblies 120. The controlling of the battery pack 100 includes preventing overcharging, over-discharging, and overcurrent. Through monitoring, balancing, and controlling, the battery pack 100 may be operated under optimal conditions, thereby preventing a decrease in the lifespan of each of the plurality of battery cell assemblies 120.

The electronic components may further include a cooling device, a power relay assembly (PRA), a safety plug, etc. The cooling device may include a cooling fan. The cooling fan may circulate air in the battery pack 100 to prevent overheating of each of the plurality of battery cell assemblies 120. The PRA may be configured to supply or cut off power from a high-voltage battery to an external load (e.g., a motor of a vehicle). The PRA may cut off power supply to an external load (e.g., a motor of a vehicle) to protect the plurality of battery cell assemblies 120 and the external load, when an abnormal voltage such as a voltage surge occurs.

The battery pack 100 may further include a plurality of bus bars configured to electrically connect the plurality of battery cell assemblies 120. The plurality of battery cell assemblies 120 may be connected in series by the plurality of bus bars. Accordingly, the battery pack 100 may be configured to output a high voltage to an external load (e.g., a motor of a vehicle).

The battery pack 100 may further include a lead plate coupled to the side walls 116, 117, 118 and 119. The lead plate may cover elements, such as the battery cell assemblies 120 and the electronic components, in the battery pack 100. The lead plate may be fixed to the battery pack 100 by a mechanical coupling means such as a fastening member.

### (Second Embodiment)

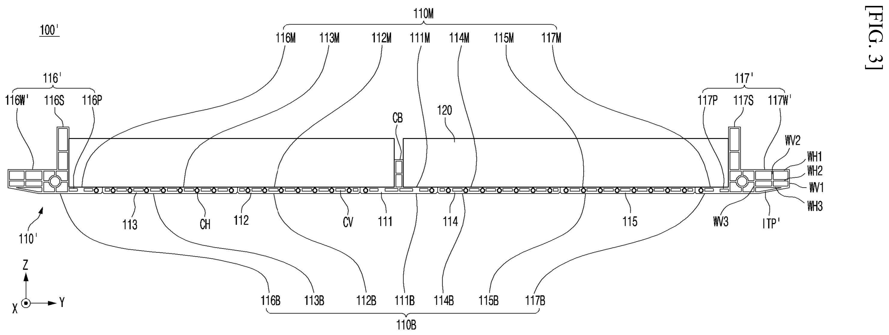

FIG. 3 is a cross-sectional view of a battery pack 100' according to other example embodiments. FIG. 3 illustrates a part corresponding to FIG. 2.

Referring to FIG. 3, the battery pack 100' may include a pack housing 110', a plurality of battery cell assemblies 120, and cross-beams 130. The plurality of battery cell assemblies 120 and the cross-beams 130 are substantially the same as those described above with reference to FIGS. 1 and 2.

Plates 111, 112, 113, 114 and 115 of the pack housing 110 are substantially the same as those described above with reference to FIGS. 1 and 2. Side walls 116' and 117' are substantially the same as the side walls 116 and 117 of FIGS. 1 and 2 except for wing parts 116W' and 117W'.

According to example embodiments, each of the wing parts 116W' and 117W' may include horizontal ribs WH1, WH2, WH3 and WH3, vertical ribs WV1, WV2 and WV3, and an impact transfer structure ITP'. Each of the horizontal ribs WH1, WH2, WH3 and WH3 of each of the wing parts 116W' and 117W' may be substantially parallel to a mounting surface 110M. Each of the vertical ribs WV1, WV2 and WV3 of each of the wing parts 116W' and 117W' may be substantially perpendicular to the mounting surface 110M. The impact transfer structure ITP' of each of the wing parts 116W' and 117W' may be oblique to the mounting surface 110M.

The horizontal ribs WH1, WH2, WH3 and WH3 and the vertical ribs WV1, WV2 and WV3 of each of the wing parts 116W' and 117W' may be a result of the extrusion process and cross each other. That is, the horizontal ribs WH1, WH2, WH3 and WH3 may cross the vertical ribs WV1, WV2 and WV3, respectively, and thus, each of the wing parts 116' and 117' may have sufficient mechanical rigidity.

According to example embodiments, the impact transfer structure ITP' of each of the wing parts 116W' and 117W' may connect the vertical rib WV1 to a bottom surface 110B. The impact transfer structure ITP' of each of the wing parts 116W' and 117W' may be connected to each of the vertical rib WV1 and the bottom surface 110B. An impact applied via the vertical rib WV1 may be transferred to the plates 111, 112, 113, 114 and 115 and plate parts 116P and 117P through the impact transfer structure ITP'. Accordingly, damage to and deformation of the battery pack 100' due to an external impact may be prevented or alleviated, and the transfer of most part of an impact, which is applied via the vertical rib WV1, to the battery cell assembly 120 may be prevented or alleviated.

The present invention has been described above in more detail with reference to the drawings, the embodiments, etc. However, the configurations illustrated in the drawings or embodiments described in the present specification are only embodiments of the present invention and do not reflect all the technical ideas of the present invention and thus it should be understood that various equivalents and modifications that replace the configurations would have been made at the filing date of the present application.

## Claims

1. A pack housing comprising:
a plurality of plates coupled to each other; and
side walls coupled to the plurality of plates, and each including a plate part coupled to the plurality of plates, a side wall part perpendicular to the plate part, and a wing part spaced apart from the plate part with the side wall part between the wing part and the plate part,
wherein the plate part of each of the side walls includes a cavity, and
each of the side walls includes an impact transfer structure horizontally overlapping the cavity of the plate part of each of the side walls.

2. The pack housing of claim 1, wherein the plate part of each of the side walls horizontally overlaps the plurality of plates.

3. The pack housing of claim 1, wherein the impact transfer structure of each of the side walls is configured to transfer an external impact applied via an outermost one of the vertical ribs to the plurality of plates.

4. The pack housing of claim 1, wherein the wing part of each of the side walls includes a horizontal rib parallel to mounting surfaces of the plurality of plates and vertical ribs perpendicular to the mounting surfaces of the plurality of plates,
wherein a lower portion of each of the vertical ribs and the horizontal rib form the impact transfer structure.

5. The pack housing of claim 1, wherein the impact transfer structure of each of the side walls is oblique to mounting surfaces of the plurality of plates.

6. The pack housing of claim 1, wherein the wing part of each of the side walls includes a vertical rib perpendicular to mounting surfaces of the plurality of plates, and
the impact transfer structure of each of the side walls connects the vertical rib of the wing part of each of the side walls to a bottom surface of the plate part of each of the side walls.

7. A pack housing comprising:
a plurality of plates coupled to each other; and
side walls coupled to the plurality of plates, and each including a plate part coupled to the plurality of plates, a side wall part perpendicular to the plate part, and a wing part spaced apart from the plate part with the side wall between the wing part and the plate part,
wherein the plate part of each of the side walls includes a cavity, and
each of the side walls includes an impact transfer structure configured to transfer an external impact applied via the wing part of each of the side walls to the plurality of plates.

8. The pack housing of claim 7, wherein the impact transfer structure of each of the side walls horizontally overlaps the cavity of the plate part of each of the side walls.

9. The pack housing of claim 7, wherein the impact transfer structure of each of the side walls horizontally overlaps a cooling channel of the plate part of each of the side walls.

10. The pack housing of claim 7, wherein the wing part of each of the side walls includes a horizontal rib parallel to mounting surfaces of the plurality of plates and vertical ribs perpendicular to the mounting surfaces of the plurality of plates,
wherein a lower portion of each of the vertical ribs and the horizontal rib form the impact transfer structure.

11. The pack housing of claim 7, wherein the impact transfer structure of each of the side walls is oblique to mounting surfaces of the plurality of plates.

12. The pack housing of claim 7, wherein the wing part of each of the side walls includes a vertical rib perpendicular to mounting surfaces of the plurality of plates, and
the impact transfer structure of each of the side walls connects the vertical rib of the wing part of each of the side walls to a bottom surface of the plate part of each of the side walls.
